(19) Europäisches Patentamt

European Patent Office

Office européen des brevets

(11) **EP 3 629 163 A1**

(12) **EUROPEAN PATENT APPLICATION**
published in accordance with Art. 153(4) EPC

(43) Date of publication:
01.04.2020 Bulletin 2020/14

(21) Application number: 18827555.6

(22) Date of filing: 06.07.2018

(51) Int Cl.:
*G06F 9/50* (2006.01)

(86) International application number:
PCT/CN2018/094827

(87) International publication number:
WO 2019/007420 (10.01.2019 Gazette 2019/02)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 07.07.2017 CN 201710554364

(71) Applicant: **ZTE Corporation**
**Shenzhen, Guangdong 518057 (CN)**

(72) Inventors:
• **TONG, Yao**
**Shenzhen**
**Guangdong 518057 (CN)**
• **LI, Hua**
**Shenzhen**
**Guangdong 518057 (CN)**
• **SHEN, Guang**
**Shenzhen**
**Guangdong 518057 (CN)**

(74) Representative: **Baudler, Ron**
**Canzler & Bergmeier**
**Patentanwälte Partnerschaft mbB**
**Friedrich-Ebert-Straße 84**
**85055 Ingolstadt (DE)**

(54) **LOAD BALANCE SCHEDULING METHOD AND DEVICE, AND COMPUTER READABLE STORAGE MEDIUM**

(57) Provided is a load balance scheduling method, including determining (S100), based on current comprehensive load values of respective preset physical machines, whether there is a first physical machine satisfying a preset condition among the preset physical machines; determining (S200), in the case that there is a first physical machine satisfying the preset condition among the preset physical machines, a virtual machine to be migrated in the first physical machine according to a first preset rule; determining (S300), a target physical machine according to a second preset rule from second physical machines in the preset physical machines other than the first physical machine; and migrating (S400) the virtual machine to be migrated to the target physical machine. Further a load balance scheduling device and a computer readable storage medium are disclosed.

FIG. 2

**Description**

FIELD OF THE INVENTION

The present disclosure relates to the field of computers, and in particular, to a load balance scheduling method and device, and a computer readable storage medium.

BACKGROUND

Cloud computing is an addition, use and delivery mode of Internet-based related services, which typically involves the provision of dynamically scalable over the Internet and which is often virtualized resources. Resource management in cloud computing is an important component of cloud computing, and is similar to resource management in the conventional distributed computing environment or the cluster computing environment from the viewpoint of providing convenient and efficient services for users.

Currently, by encapsulating services in virtual machines and mapping to respective physical servers, virtualization technology can re-map virtual machines to physical resources according to changes in load, thereby dynamically achieving load balance of the entire system. However, resource management, that is, dynamic scheduling of virtual machines, in the existing cloud computing models is difficult to implement effective and dynamic scheduling of virtual machine resources to achieve overall load balance of a cloud data center.

SUMMARY

The following is a summary of the subject matter described in detail in the disclosure. This summary is not intended to limit the scope of the claims. Aiming at the problem that the dynamic scheduling of virtual machines in the existing cloud computing models is difficult to realize overall load balance of a cloud data center, the present disclosure provides a load balance scheduling method and device, and a computer readable storage medium.

The present disclosure provides a load balance scheduling method, which includes the steps of: determining, based on current comprehensive load values of respective preset physical machines, whether there is a first physical machine satisfying a preset condition among the preset physical machines; determining, when there is a first physical machine satisfying the preset condition among the preset physical machines, a virtual machine to be migrated in the first physical machine according to a first preset rule; determining, a target physical machine according to a second preset rule from second physical machines in the preset physical machines other than the first physical machine; and migrating the virtual machine to be migrated to the target physical machine.

In addition, to achieve the above object, the present disclosure further provides a load balance scheduling device, including: a memory, a processor, and a load balance scheduling program stored in the memory and operable by the processor, which load balance scheduling program, when executed by the processor, causes any of the load balance scheduling methods as described above to be implemented.

In addition, to achieve the above object, the present disclosure further provides a computer readable storage medium, the computer readable storage medium having a load balance scheduling program stored thereon which, when executed by a processor, causes the steps of any of the load balance scheduling methods as described above to be implemented.

Other aspects will become apparent upon reading and understanding the drawings and detailed description.

BRIEF DESCRIPTION OF THE DRAWINGS

Fig. 1 is a schematic structural diagram of a terminal to which a load balance scheduling device belongs in a hardware operating environment according to an embodiment of the present disclosure;
Fig. 2 is a flowchart illustrating a first example of the load balance scheduling method according to the present disclosure;
Fig. 3 is a schematic block diagram of a cloud computing center of the present disclosure;
Fig. 4 is a detailed flowchart illustrating the steps of determining whether there is a first physical machine satisfying a preset condition among the preset physical machines in a second example of the load balance scheduling method of the present disclosure;
Fig. 5 is a detailed flowchart illustrating the steps of determining a virtual machine to be migrated in the first physical machine according to a first preset rule in a third example of the load balance scheduling method of the present disclosure;

Fig. 6 is a detailed flowchart illustrating the steps of determining 1the presence of a first physical machine satisfying a preset condition among the preset physical machines in a fourth example of the load balance scheduling method of the present disclosure;

Fig. 7 is a flowchart illustrating a fifth example of the load balance scheduling method according to the present disclosure;

Fig. 8 is a detailed flowchart illustrating the steps of acquiring corresponding CPU utilization rates, memory utilization rates and bandwidth utilization rates of respective virtual machines in the first physical machine in a sixth example of the load balance scheduling method of the present disclosure;

Fig. 9 is a detailed flowchart illustrating the steps of determining the target physical machine according to the second preset rule in a seventh example of the load balance scheduling method of the present disclosure;

Fig. 10 is a detailed flowchart illustrating the steps of determining the target physical machine from the second physical machines in an eighth example of the load balance scheduling method of the present disclosure; and

Fig. 11 is a detailed flowchart illustrating the steps of acquiring a CPU resource demand parameter, a memory resource demand parameter and a bandwidth resource demand parameter of the virtual machine to be migrated in an eighth example of the load balance scheduling method of the present disclosure.

## DETAILED DESCRIPTION OF THE EMBODIMENTS

The specific embodiments described herein are merely for illustration of the disclosure and are not intended to limit the disclosure.

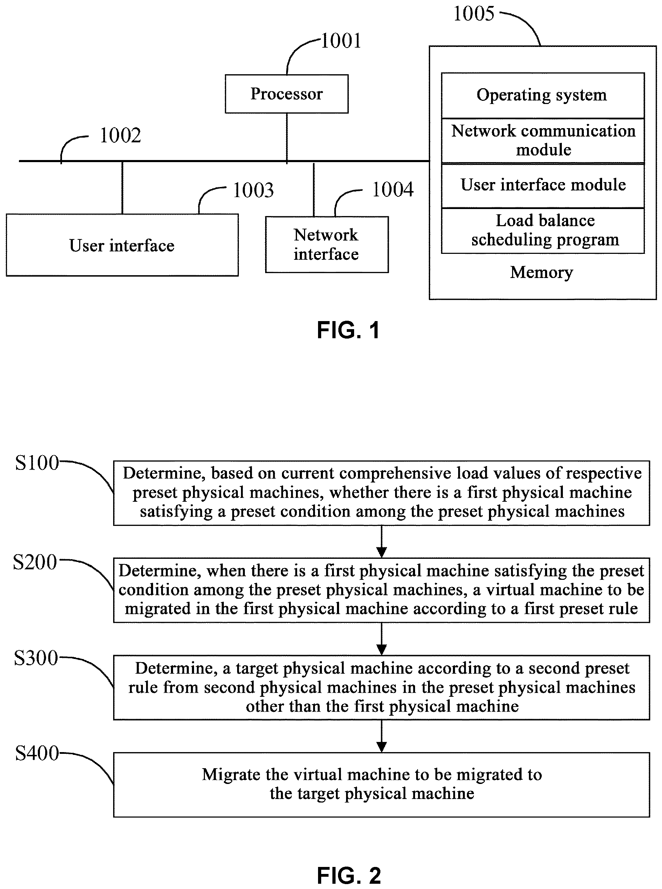

Referring to Fig. 1, Fig. 1 is a schematic structural diagram of a terminal to which a load balance scheduling device belongs in a hardware operating environment according to an embodiment of the present disclosure.

The terminal in the embodiments of the present disclosure may be a PC. As shown in Fig. 1, the terminal may include: a processor 1001, such as a CPU, a network interface 1004, a user interface 1003, a memory 1005, and a communication bus 1002. The communication bus 1002 is configured to enable connective communication between these components. The user interface 1003 may include a display, and an input unit such as a keyboard, and may further include a standard wired or wireless interface. In an embodiment, the network interface 1004 may include a standard wired or wireless interface (e.g., a Wi-Fi interface). The memory 1005 may be a highspeed RAM memory or a stable memory (e.g., a non-volatile memory) such as a magnetic disk memory. In an embodiment, the memory 1005 may be a storage device separate from the processor 1001 as described above.

In an embodiment, the terminal may further include a camera, a Radio Frequency (RF) circuit, a sensor, an audio circuit, a Wi-Fi module, and the like. The sensor may include, for example, an optical sensor, a motion sensor, and the like. The optical sensor may include an ambient light sensor that adjusts brightness of a display according to the brightness of ambient light, and a proximity sensor that turns off a display and /or backlight when a mobile terminal approaches the ear. As one of the motion sensors, a gravity acceleration sensor may detect the magnitude of acceleration in each direction (generally, three axes), detect the magnitude and direction of gravity in a stationary state, and may be used for applications for recognizing the attitude of the mobile terminal (such as horizontal and vertical screen switching, related games, magnetometer attitude calibration), vibration recognition related functions (such as pedometer and tapping) and the like. Apparently, the mobile terminal may be further provided with other sensors such as a gyroscope, a barometer, a hygrometer, a thermometer, and an infrared sensor, which are not enumerated herein.

Those skilled in the art will appreciate that the terminal structure shown in Fig. 1 is not intended to be limiting, and more or fewer components than shown, or a combination of some components, or a different arrangement of components may be included.

As shown in Fig. 1, the memory 1005, as a computer storage medium, may include an operating system, a network communication module, a user interface module, and a load balance scheduling program.

In the terminal shown in Fig. 1, the network interface 1004 is mainly configured to be connected to a backend server and perform data communication with the backend server; the user interface 1003 is mainly configured to be connected to a client (customer end) and perform data communication with the client; and the processor 1001 may be configured to call the load balance scheduling program stored in the memory 1005.

In this embodiment, the load balance scheduling device includes: a memory 1005, a processor 1001 and a data operation program stored in the memory and executable by the processor. When the processor 1001 calls the load balance scheduling program stored in the memory 1005, the following operations are performed:

determining, based on current comprehensive load values of respective preset physical machines, whether there is a first physical machine satisfying a preset condition among the preset physical machines;

determining, in the case that there is a first physical machine satisfying the preset condition among the preset physical machines, a virtual machine to be migrated in the first physical machine according to a first preset rule;

determining, a target physical machine according to a second preset rule from second physical machines in the preset physical machines other than the first physical machine; and
migrating the virtual machine to be migrated to the target physical machine. The processor 1001 may call the load balance scheduling program stored in the memory 1005 to further perform the following operations:

determining, based on current comprehensive load values of respective preset physical machines, whether there is an overload physical machine having a comprehensive load value greater than a maximum load threshold among the preset physical machines;
determining, in the case that there is an overload physical machine among the preset physical machines, whether a number of overload events of the overload physical machine in a preset time interval before the current moment is greater than a first preset threshold; and
using the overload physical machine as the first physical machine satisfying the preset condition when the number of overload events is greater than the first preset threshold.

The processor 1001 may call the load balance scheduling program stored in the memory 1005 to further perform the following operations:

acquiring CPU utilization rates, memory utilization rates and bandwidth utilization rates of respective virtual machines in the first physical machine;
calculating migration loss ratios of the respective virtual machines based on the acquired CPU utilization rates, memory utilization rates and bandwidth utilization rates; and
using a virtual machine with the maximum migration loss ratio among the respective virtual machines as the virtual machine to be migrated.

The processor 1001 may call the load balance scheduling program stored in the memory 1005 to further perform the following operations:

determining, based on the current comprehensive load values of respective preset physical machines, whether there is an underload physical machine having a comprehensive load value less than a minimum load threshold among the preset physical machines;
determining, in the case that there is an underload physical machine among the preset physical machines, whether a number of underload events of the underload physical machine in a preset time interval before the current moment is greater than a second preset threshold; and
using the underload physical machine as the first physical machine satisfying the preset condition when the number of underload events is greater than the second preset threshold.

The step of determining the virtual machine to be migrated in the first physical machine according to the first preset rule includes: using all the virtual machines in the first physical machine as virtual machines to be migrated. The processor 1001 may call the load balance scheduling program stored in the memory 1005 to further perform the following operations:

acquiring CPU characteristic parameters, memory characteristic parameters and bandwidth characteristic parameters of the respective preset physical machines; and
calculating the comprehensive load values of the respective preset physical machines based on the acquired CPU characteristic parameters, memory characteristic parameters and bandwidth characteristic parameters.

The processor 1001 may call the load balance scheduling program stored in the memory 1005 to further perform the following operations:

acquiring a usage amount of CPU resources, a reserved amount of CPU resources and a total amount of CPU resources of the respective preset physical machines, and calculating the CPU characteristic parameters of the respective preset physical machines based on the acquired the usage amount of CPU resources, reserved amount of CPU resources and total amount of CPU resources;
acquiring a usage amount of memory resources, a reserved amount of memory resources and a total amount of memory resources of the respective preset physical machines, and calculating the memory characteristic parameters of the respective preset physical machines based on the acquired usage amount of memory resources, reserved amount of memory resources and total amount of memory resources; and
acquiring a usage amount of bandwidth resources, a reserved amount of bandwidth resources and a total amount of bandwidth resources of the respective preset physical machines, and calculating the bandwidth characteristic parameters of the respective preset physical machines based on the acquired usage amount of bandwidth resources, reserved amount of bandwidth resources and total amount of bandwidth resources.

The processor 1001 may call the load balance scheduling program stored in the memory 1005 to further perform the following operations:

acquiring a CPU resource demand parameter, a memory resource demand parameter and a bandwidth resource demand parameter of the virtual machine to be migrated; and
determining the target physical machine from the second physical machines based on the acquired CPU resource demand parameter, memory resource demand parameter and bandwidth resource demand parameter, and the CPU characteristic parameters, memory characteristic parameters and bandwidth characteristic parameters of the respective second physical machines.

The processor 1001 may call the load balance scheduling program stored in the memory 1005 to further perform the following operations:

generating a demand vector of the virtual machine to be migrated based on the acquired CPU resource demand parameter, memory resource demand parameter and bandwidth resource demand parameter;
generating performance vectors of the respective second physical machines based on the CPU characteristic parameters, the memory characteristic parameters and the bandwidth characteristic parameters; and
determining the target physical machine from the second physical machines based on the demand vector, the performance vector and the preset weight vector.

The processor 1001 may call the load balance scheduling program stored in the memory 1005 to further perform the following operations:

acquiring a demanded amount of CPU resources of the virtual machine to be migrated, and calculating the CPU resource demand parameter of the virtual machine to be migrated based on the demanded amount of CPU resources, the reserved amount of CPU resources of the respective second physical machines and the total amount of CPU resources of the respective second physical machines;
acquiring a demanded amount of memory resources of the virtual machine to be migrated, and calculating the memory resource demand parameter of the virtual machine to be migrated based on the demanded amount of memory resources, the reserved amount of memory resources of the second physical machines and the total amount of memory resources of the second physical machines; and
acquiring a demanded amount of bandwidth resources of the virtual machine to be migrated, and calculating the bandwidth resource demand parameter of the virtual machine to be migrated based on the demanded amount of bandwidth resources, the reserved amount of bandwidth resources of the second physical machines and the total amount of bandwidth resources of the second physical machines.

There is provided a load balance scheduling method in the disclosure. Referring to Fig. 2, Fig. 2 is a flowchart illustrating a first example of the load balance scheduling method according to the present disclosure. In an embodiment, the load balance scheduling method includes:

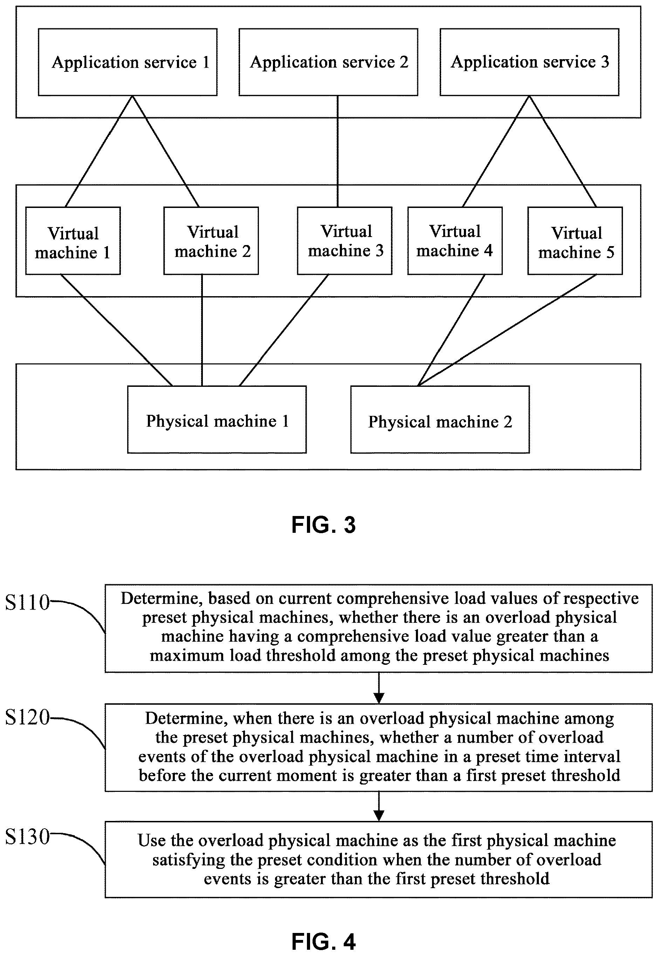

At step S100, determining, based on current comprehensive load values of respective preset physical machines, whether there is a first physical machine satisfying a preset condition among the preset physical machines;
As shown in Fig. 3, the cloud computing model is mainly composed of a three-layer structure including a physical resource layer, a virtual resource layer, and an application service layer. The application service layer mainly includes various service management application systems among which certain heterogeneity exists. The application service layer is built on the virtual resource layer to realize dynamic expansion and contraction of the application services as needed. The virtual resource layer is configured to provide an operation carrier for the application service layer, and built on the physical resource layer. The virtual resource layer quickly and dynamically built virtual machines through a virtualization technology so that performance requirements of the application systems on the application service layer are met.

Generally, one application system may be carried on one or more virtual machines according to the access amount requirement of the application system, and a one-to-many mapping relationship exists between the application systems and the virtual machines. The physical resource layer provides hardware resources for the virtual resource layer, and is mainly composed of various hardware servers of the data center. A many-to-one mapping relationship exists between the virtual machines on the virtual resource layer and the physical machines on the physical resource layer, and one physical machine may carry one or more virtual machines. The access and connection requirements of the application services in the cloud computing model are dynamically changed. The cloud resource management platform may maintain system stability of the application services by increasing or reducing the number of virtual machines, but changes in the number of virtual machines may influence an overall load balance level and energy consumption of a clustering of physical servers in the data center, thereby affecting stability of the application services.

The preset physical machines are all physical machines, i.e., physical nodes, under the current cloud resource management platform, and since a comprehensive load value of the physical machines which are not currently operated is 0, generally speaking, the preset physical machines may include only the physical machines which are currently operated under the current cloud resource management platform.

In this embodiment, comprehensive load values of the respective preset physical machines may be obtained by calculating from the CPU characteristic parameters, the memory characteristic parameters, and the bandwidth characteristic parameters of the respective preset physical machines. For example, an average of the CPU characteristic parameter, the memory characteristic parameter, and the bandwidth characteristic parameter of a certain preset physical machine is the comprehensive load value of the same preset physical machine. The CPU characteristic parameter, the memory characteristic parameter, and the bandwidth characteristic parameter of the certain physical machine may be obtained by calculating from operation parameters of the physical machine. For example, the corresponding CPU characteristic parameter may be obtained by calculating from a usage amount of CPU resources, a reserved amount of CPU resources, and a total amount of CPU resources of the physical machine; the corresponding memory characteristic parameter may be obtained by calculating from a usage amount of memory resources, a reserved amount of memory resources, and a total amount of memory resources of the physical machine; and the corresponding bandwidth characteristic parameter may be obtained by calculating from a usage amount of bandwidth resources, a reserved amount of bandwidth resources, and a total amount of bandwidth resources of the physical machine.

In this embodiment, it is determined whether there is a physical machine satisfying a preset condition among the preset physical machines according to the comprehensive load values of the respective preset physical machines, where the preset condition may be that the comprehensive load value is greater than a maximum load threshold, that is, it is determined whether there is a physical machine having a comprehensive load value greater than the maximum load threshold among the preset physical machines; or the preset condition may be that the comprehensive load value is less than a minimum load threshold, that is, it is determined whether there is a physical machine having a comprehensive load value less than the minimum load threshold among the preset physical machines; or the preset condition may be that the comprehensive load value is greater than a maximum load threshold and a number of times where the comprehensive load value is greater than the maximum load threshold exceeds a preset number of times; or the preset condition may be that the comprehensive load value is less than a minimum load threshold and a number of times where the comprehensive load value is less than the minimum load threshold exceeds a preset number of times, etc,. For example, it may be regularly determined whether there is a physical machine satisfying a preset condition among the preset physical machines according to the comprehensive load values of the respective preset physical machines, where the regular time interval may be reasonably set according to actual requirements.

At step S200, determining, in the case that there is a first physical machine satisfying the preset condition among the preset physical machines, a virtual machine to be migrated in the first physical machine according to a first preset rule.

In this embodiment, in the case that there is a first physical machine satisfying the preset condition among the preset physical machines, a virtual machine to be migrated is determined in the first physical machine. For example, migration loss ratios of respective virtual machines in the first physical machine may be acquired, and a virtual machine with the maximum migration loss ratio is taken as the virtual machine to be migrated.

At step S300, determining, a target physical machine according to a second preset rule from second physical machines in the preset physical machines other than the first physical machine.

In this embodiment, during the process of determining the virtual machine to be migrated, a target physical machine is determined from second physical machines in the preset physical machines other than the first physical machine. For example, the target physical machine may be determined from the second physical machines according to the CPU resource demand parameter, the memory resource demand parameter, and the bandwidth resource demand parameter of the virtual machine to be migrated, and the CPU characteristic parameters, the memory characteristic parameters, and the bandwidth characteristic parameters of the respective second physical machines. At step S400, migrating the virtual machine to be migrated to the target physical machine.

In this embodiment, when the target physical machine is selected, the virtual machine to be migrated is migrated to the target physical machine, so that migration of the virtual machine to be migrated in the first physical machine satisfying the preset condition is completed, and so that times of migration of virtual machines are greatly reduced, the influence of migration on the overall performance of the cloud computing center is mitigated, and the effective utilization rate of resources is improved, while performance of the application services is ensured.

In the load balance scheduling method according to this embodiment, it is determined whether there is a first physical machine satisfying a preset condition among the preset physical machines based on current comprehensive load values of respective preset physical machines; then a virtual machine to be migrated in the first physical machine is determined according to a first preset rule in the case that there is a first physical machine satisfying the preset condition among the preset physical machines; next, a target physical machine is determined according to a second preset rule from second physical machines in the preset physical machines other than the first physical machine; and finally, the virtual machine to be migrated is migrated to the target physical machine. Therefore, migration of the virtual machine to be migrated in the first physical machine satisfying the preset condition can be completed. The times of migration of virtual machines can be greatly reduced, the influence of migration on the overall performance of the cloud computing center can be mitigated, and the effective utilization rate of resources can be improved, while performance of the application services is ensured.

Based on the first example, a second example of the load balance scheduling method according to the present disclosure is proposed. Referring to Fig. 4, in an embodiment, the step S100 includes:

At step S110, determining, based on current comprehensive load values of respective preset physical machines, whether there is an overload physical machine having a comprehensive load value greater than a maximum load threshold among the preset physical machines.

In this embodiment, the preset condition includes that the comprehensive load value is greater than a maximum load threshold and a number of overload events is greater than the first preset threshold in a preset time interval. Therefore, it is firstly determined whether there is an overload physical machine, i.e., a physical machine with a current comprehensive load value greater than the maximum load threshold, in the preset physical machines according to the current comprehensive load values of the respective preset physical machines.

The maximum load threshold may be reasonably set according to the actual situation of the cloud computing center. For example, the maximum load threshold may be set to 80%, or the like.

At step S120, determining, in the case that there is an overload physical machine among the preset physical machines, whether a number of overload events of the overload physical machine in a preset time interval before the current moment is greater than a first preset threshold.

In this embodiment, in the case that there is an overload physical machine among the preset physical machines, by determining whether a number of overload events of the overload physical machine in a preset time interval before the current moment is greater than a first preset threshold, it can be determined whether overload events occur in the overload physical machine frequently, and if so, virtual machines in the overload physical machine need to be migrated to balance the load on the overload physical machine so that the loads on all the physical machines in the cloud computing center are balanced.

The preset time interval and the first preset threshold may be reasonably set. For example, the preset time interval may be set to 5 minutes, 10 minutes, etc., and the first preset threshold may be set to 3 times, 5 times, etc.

At step S130, using the overload physical machine as the first physical machine satisfying the preset condition when the number of overload events is greater than the first preset threshold.

In this embodiment, if a number of overload events is greater than the first preset threshold, it means that overload events occur in the overload physical machine frequently, and virtual machines in the overload physical machine need to be migrated. Therefore, the overload physical machine is taken as the first physical machine satisfying the preset condition.

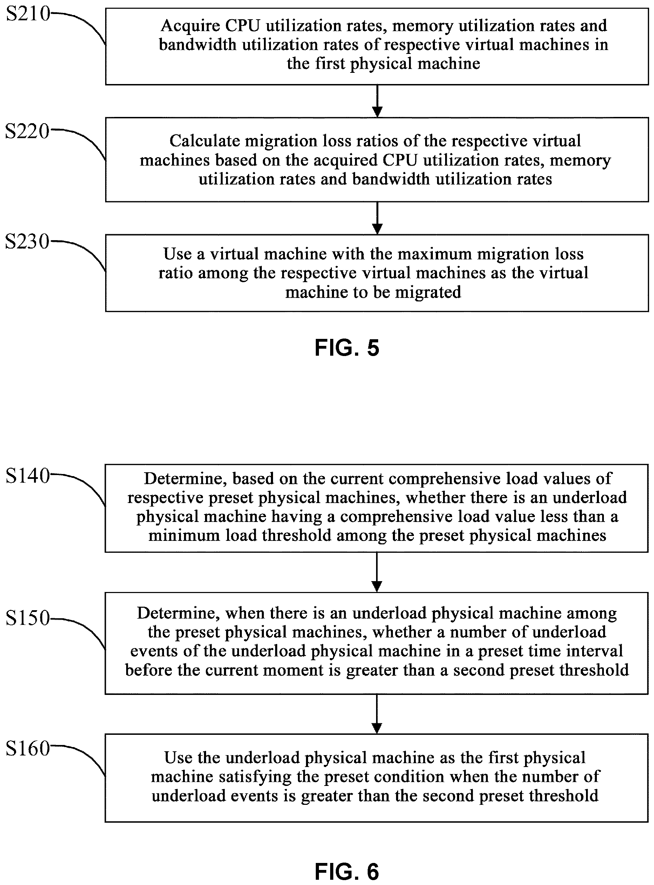

In the load balance scheduling method according to this embodiment, by determining, based on current comprehensive load values of respective preset physical machines, whether there is an overload physical machine having a comprehensive load value greater than a maximum load threshold among the preset physical machines; then determining, in the case that there is an overload physical machine among the preset physical machines, whether a number of overload events of the overload physical machine in a preset time interval before the current moment is greater than a first preset threshold; and then using the overload physical machine as the first physical machine satisfying the preset condition when the number of overload events is greater than the first preset threshold, it is possible to determine the first physical machine satisfying the preset condition, i.e., an overload physical machine, among the preset physical machines according to the maximum load threshold and the number of overload events. As such, the overload physical machine is accurately determined to complete migration of the overload physical machine, so that times of migration of virtual machines are greatly reduced, the influence of migration on the overall performance of the cloud computing center is mitigated, and the effective utilization rate of resources is further improved, while performance of the application services is ensured. Based on the second example, a third example of the load balance scheduling method of the present disclosure is proposed. Referring to Fig. 5, in an embodiment, the step S200 includes:

At step S210, acquiring CPU utilization rates, memory utilization rates and bandwidth utilization rates of respective virtual machines in the first physical machine.

In this embodiment, when the current first physical machine is an overload physical machine, the virtual machines to be migrated in the overload physical machine are determined, for example, from migration loss ratios of the respective virtual machines in the overload physical machine. Therefore, the CPU utilization rates, the memory utilization rates, and the bandwidth utilization rates of the respective virtual machines in the first physical machine are firstly acquired.

At step S220, calculating migration loss ratios of the respective virtual machines based on the acquired CPU utilization rates, memory utilization rates and bandwidth utilization rates.

In this embodiment, the migration loss ratio of each virtual machine is calculated according to a calculation equation of the migration loss ratio, e.g., migration loss ratio = (CPU utilization rate + bandwidth utilization rate)/memory utilization rate. Therefore, the migration loss ratio of each virtual machine may be obtained by calculating from the CPU utilization rate, the memory utilization rate, and the bandwidth utilization rate of the virtual machine.

Step S230, using a virtual machine with the maximum migration loss ratio among the respective virtual machines as the virtual machine to be migrated. In this embodiment, when migration loss ratios of the respective virtual machines in the first physical machine are acquired, a virtual machine with the maximum migration loss ratio among the respective virtual machines is taken as the virtual machine to be migrated. Therefore, the virtual machine with the maximum migration loss ratio in the first physical machine is migrated so that when the migration is completed in sequence, the load on the first physical machine can be reduced to the maximum and thus within a normal load range.

In the load balance scheduling method according to this embodiment, by acquiring CPU utilization rates, memory utilization rates and bandwidth utilization rates of respective virtual machines in the first physical machine; then calculating migration loss ratios of the respective virtual machines based on the acquired CPU utilization rates, memory utilization rates and bandwidth utilization rates; and using a virtual machine with the maximum migration loss ratio among the respective virtual machines as the virtual machine to be migrated, a virtual machine with the maximum migration loss ratio is used as the virtual machine to be migrated, and the load on the first physical machine is reduced to the maximum so that the first physical machine can be operated normally with the load after the migration. In such a manner, times of migration of virtual machines are greatly reduced, the influence of migration on the overall performance of the cloud computing center is mitigated, and the effective utilization rate of resources is further improved.

Based on the first example, a fourth example of the load balance scheduling method of the present disclosure is proposed. Referring to Fig. 6, in an embodiment, the step S100 includes:

At step S140, determining, based on the current comprehensive load values of respective preset physical machines, whether there is an underload physical machine having a comprehensive load value less than a minimum load threshold among the preset physical machines.

In this embodiment, the preset condition includes that the comprehensive load value is less than a minimum load threshold, and a number of underload events is greater than the second preset threshold in a preset time interval. Therefore, it is firstly determined whether there is an underload physical machine, i.e., a physical machine with a current comprehensive load value less than the minimum load threshold, in the preset physical machines according to the current comprehensive load values of the respective preset physical machines.

The minimum load threshold may be reasonably set according to the actual situation of the cloud computing center. For example, the maximum load threshold may be set to 20%.

At step S150, determining, in the case that there is an underload physical machine among the preset physical machines, whether a number of underload events of the underload physical machine in a preset time interval before the current moment is greater than a second preset threshold.

In this embodiment, in the case that there is an underload physical machine among the preset physical machines, by determining whether a number of underload vents of the underload physical machine in a preset time interval before the current moment is greater than a second preset threshold, it can be determined whether underload events occur in the underload physical machine frequently, and if so, all the virtual machines in the underload physical machine need to be migrated to stop operation of the underload physical machine, thereby reducing the number of started physical machines in the cloud computing center and improving the resource utilization rate.

The preset time interval and the second preset threshold may be reasonably set. For example, the preset time interval may be set to 5 minutes, 10 minutes, etc., and the second preset threshold may be set to 3 times, 5 times, etc., and the second preset threshold and the first preset threshold may be the same or different.

At step S160, using the underload physical machine as the first physical machine satisfying the preset condition when the number of underload events is greater than the second preset threshold.

In this embodiment, if a number of underload events is greater than the second preset threshold, it means that underload events occur in the underload physical machine frequently, and virtual machines in the underload physical machine need to be migrated. Therefore, the underload physical machine is taken as the first physical machine satisfying the preset condition.

The step S300 includes: using all the virtual machines in the first physical machine as virtual machines to be migrated.

In this embodiment, since the first physical machine is an underload physical machine with less virtual machines operated thereon or less applications operated on the virtual machines, all the virtual machines in the first physical machine are used as virtual machines to be migrated to migrate all the virtual machines in the first physical machine, and after migration of the virtual machines, the underload physical machine is stopped or directly shut down so that the number of started physical machines in the cloud computing center at the same time is reduced to improve the energy efficiency of the cloud computing center and reduce the energy consumption.

Alternatively, in another embodiment, after the step S40, the method further includes: stopping operating the first physical machine or shutting down the first physical machine.

In the load balance scheduling method provided in this embodiment, by determining, based on the current comprehensive load values of respective preset physical machines, whether there is an underload physical machine having a comprehensive load value less than a minimum load threshold among the preset physical machines; then determining, in the case that there is an underload physical machine among the preset physical machines, whether a number of underload events of the underload physical machine in a preset time interval before the current moment is greater than a second preset threshold; using the underload physical machine as the first physical machine satisfying the preset condition when the number of underload events is greater than the second preset threshold; and finally using all the virtual machines in the first physical machine as virtual machines to be migrated, all the virtual machines in the underload physical machine, i.e., the first physical machine, are used as virtual machines to be migrated so that the number of operated physical machines in the cloud computing center is reduced to improve the energy efficiency of the cloud computing center and reduce the energy consumption, and further improve the effective utilization rate of resources.

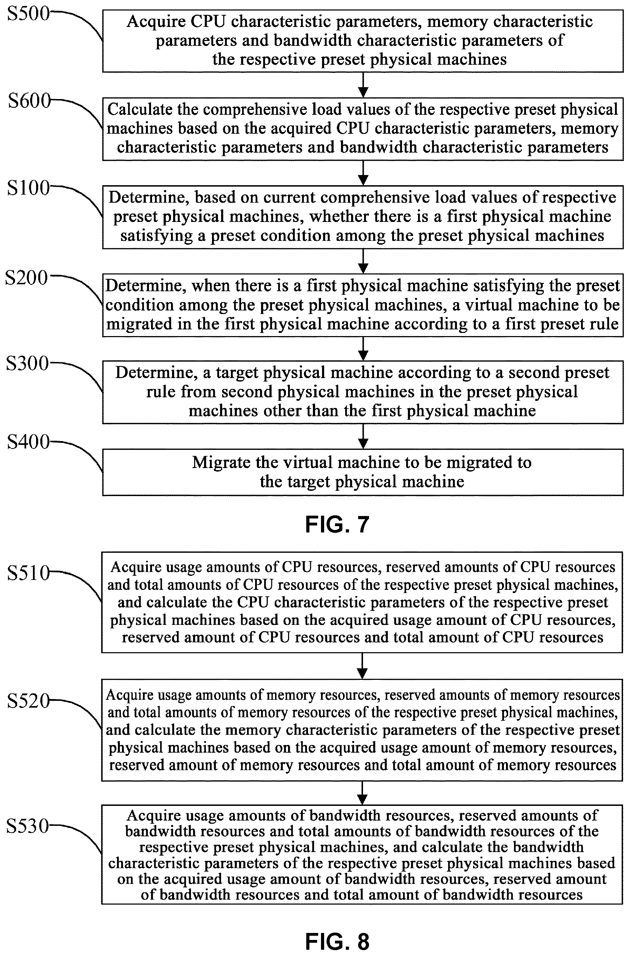

Based on the first example, a fifth example of the load balance scheduling method of the present disclosure is proposed. Referring to Fig. 7, in an embodiment, before the step S100, the load balance scheduling method further includes:

At step S500, acquiring CPU characteristic parameters, memory characteristic parameters and bandwidth characteristic parameters of the respective preset physical machines.

In this embodiment, the CPU characteristic parameter of a preset physical machine may be obtained from a usage amount of CPU resources, a reserved amount of CPU resources, and a total amount of CPU resources of the preset physical machine; the memory characteristic parameter of a preset physical machine may be obtained from a usage amount of memory resources, a reserved amount of memory resources, and a total amount of memory resources of the preset physical machine; and the bandwidth characteristic parameter of a preset physical machine may be obtained from a usage amount of bandwidth resources, a reserved amount of bandwidth resources, and a total amount of bandwidth resources of the preset physical machine.

At step S600, calculating the comprehensive load values of the respective preset physical machines based on the acquired CPU characteristic parameters, memory characteristic parameters and bandwidth characteristic parameters.

In this embodiment, the comprehensive load values of the respective preset physical machines may be obtained by calculating from the CPU characteristic parameters, the memory characteristic parameters, and the bandwidth characteristic parameters of the respective physical machines. For example, the comprehensive load value of a certain preset physical machine is an average of the CPU characteristic parameter, the memory characteristic parameter, and the bandwidth characteristic parameter of that preset physical machine.

In the load balance scheduling method according to this embodiment, by acquiring CPU characteristic parameters, memory characteristic parameters and bandwidth characteristic parameters of the respective preset physical machines; and then calculating the comprehensive load values of the respective preset physical machines based on the acquired CPU characteristic parameters, memory characteristic parameters and bandwidth characteristic parameters, the accurate comprehensive load value of a preset physical machine may be obtained from the CPU characteristic parameter, memory characteristic parameter and bandwidth characteristic parameter of that preset physical machine, so that accuracy of the comprehensive load value can be improved. In such a manner, times of migration of virtual machines can be greatly reduced, the influence of migration on the overall performance of the cloud computing center can be mitigated, and the effective utilization rate of resources can be further improved, while performance of the application services can be ensured.

Based on the fifth example, a sixth example of the load balance scheduling method of the present disclosure is proposed. Referring to Fig. 8, in an embodiment, the step S500 includes:

At step S510, acquiring a usage amount of CPU resources, a reserved amount of CPU resources and a total amount of CPU resources of the respective preset physical machines, and calculating the CPU characteristic parameters of the respective preset physical machines based on the acquired usage amount of CPU resources, reserved amount of CPU resources and total amount of CPU resources.

In this embodiment, the CPU characteristic parameter of a preset physical machine may be obtained from a usage amount of CPU resources, a reserved amount of CPU resources, and a total amount of CPU resources of the preset physical machine. Taking one of the preset physical machines as an example, a calculation equation of the CPU characteristic parameter is as follows:

$$\text{CPU characteristic parameter} = 1 - \text{usage amount of CPU resources} / (\text{total amount of CPU resources} - \text{reserved amount of CPU resources}).$$

At step S520, acquiring a usage amount of memory resources, a reserved amount of memory resources and a total amount of memory resources of the respective preset physical machines, and calculating the memory characteristic parameters of the respective preset physical machines based on the acquired usage amount of memory resources, reserved amount of memory resources and total amount of memory resources.

In this embodiment, the memory characteristic parameter of a preset physical machine may be obtained from a usage amount of memory resources, a reserved amount of memory resources, and a total amount of memory resources of the preset physical machine. Taking one of the preset physical machines as an example, a calculation equation of the memory characteristic parameter is as follows:

$$\text{Memory characteristic parameter} = 1 - \text{usage amount of memory resources} / (\text{total amount of memory resources} - \text{reserved amount of memory resources}).$$

At step S530, acquiring a usage amount of bandwidth resources, a reserved amount of bandwidth resources and a total amount of bandwidth resources of the respective preset physical machines, and calculating the bandwidth characteristic parameters of the respective preset physical machines based on the acquired usage amount of bandwidth resources, reserved amount of bandwidth resources and total amount of bandwidth resources.

In this embodiment, the bandwidth characteristic parameter of a preset physical machine may be obtained from a usage amount of bandwidth resources, a reserved amount of bandwidth resources, and a total amount of bandwidth resources of the preset physical machine. Taking one of the preset physical machines as an example, a calculation equation of the bandwidth characteristic parameter is as follows:

$$\text{Bandwidth characteristic parameter} = 1 - \text{usage amount of bandwidth resources} / (\text{total amount of bandwidth resources} - \text{reserved amount of bandwidth resources}).$$

In the load balance scheduling method according to this embodiment, by acquiring a usage amount of CPU resources, a reserved amount of CPU resources and a total amount of CPU resources of the respective preset physical machines, and calculating the CPU characteristic parameters of the respective preset physical machines based on the acquired usage amount of CPU resources, reserved amount of CPU resources and total amount of CPU resources; then acquiring a usage amount of memory resources, a reserved amount of memory resources and a total amount of memory resources of the respective preset physical machines, and calculating the memory characteristic parameters of the respective preset physical machines based on the acquired usage amount of memory resources, reserved amount of memory resources and total amount of memory resources; and then acquiring a usage amount of bandwidth resources, a reserved amount of bandwidth resources and a total amount of bandwidth resources of the respective preset physical machines, and calculating the bandwidth characteristic parameters of the respective preset physical machines based on the acquired usage amount of bandwidth resources, reserved amount of bandwidth resources and total amount of bandwidth resources, the accurate CPU characteristic parameter, memory characteristic parameter and bandwidth characteristic parameter of the preset physical machine can be obtained, thereby improving the accuracy of the comprehensive load value.

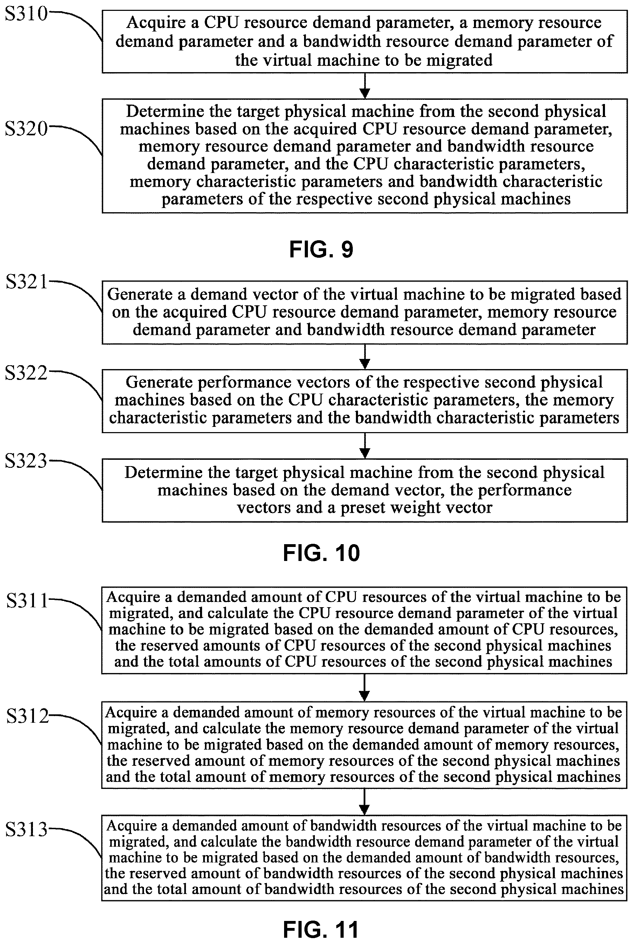

Based on the fifth example, a seventh example of the load balance scheduling method of the present disclosure is proposed. Referring to Fig. 9, in an embodiment, the step S300 includes:

At step S310, acquiring a CPU resource demand parameter, a memory resource demand parameter and a bandwidth resource demand parameter of the virtual machine to be migrated.

In this embodiment, the CPU resource demand parameter of the virtual machine to be migrated with respect to the respective second physical machines may be obtained according to the demanded amount of CPU resources of the virtual machine to be migrated, and the reserved amount of CPU resources and the total amount of CPU resources of the respective second physical machines; the memory resource demand parameter of the virtual machine to be migrated with respect to the respective second physical machines may be obtained according to the demanded amount of memory resources of the virtual machine to be migrated, and the reserved amount of memory resources and the total amount of memory resources of the respective second physical machines; and the bandwidth resource demand parameter of the virtual machine to be migrated with respect to the respective second physical machines may be obtained according to the demanded amount of bandwidth resources of the virtual machine to be migrated, and the reserved amounts of bandwidth resources and the total amounts of bandwidth resources of the respective second physical machines.

At step S320, determining the target physical machine from the second physical machines based on the acquired CPU resource demand parameter, memory resource demand parameter and bandwidth resource demand parameter, and the CPU characteristic parameters, memory characteristic parameters and bandwidth characteristic parameters of the respective second physical machines.

In this embodiment, a demand vector of the virtual machine to be migrated may be generated based on the CPU resource demand parameter, memory resource demand parameter and bandwidth resource demand parameter of the virtual machine to be migrated with respect to the respective second physical machines. The number of demand vectors is the same as the number of physical machines in the second physical machines, and elements in each of the demand vectors are the CPU resource demand parameter, the memory resource demand parameter, and the bandwidth resource demand parameter of the virtual machine to be migrated relative to the same physical machine of the second physical machines. Meanwhile, performance vectors of the respective second physical machines are generated based on the CPU characteristic parameters, the memory characteristic parameters and the bandwidth characteristic parameters of the respective second physical machines. The number of performance vectors is the same as the number of physical machines in the second physical machines, and elements in each of the performance vectors are the CPU characteristic parameter, the memory characteristic parameter and the bandwidth characteristic parameter of the same physical machine of the second physical machines. The demand vectors and the performance vectors are correspondingly arranged, that is, the ith demand vector and the ith performance vector correspond to the same physical machine of the second physical machines. Then, a difference vector between the performance vector and the demand vector of each of the second physical machines is calculated, and a product between the difference vector and a preset weight vector of each of the second physical machines is calculated, so as to obtain matching degrees of the respective second physical machines, and take the second physical machine with the maximum matching degree as the target physical machine.

In the load balance scheduling method according to this embodiment, by acquiring a CPU resource demand parameter, a memory resource demand parameter and a bandwidth resource demand parameter of the virtual machine to be migrated; and then determining the target physical machine from the second physical machines based on the acquired CPU resource demand parameter, memory resource demand parameter and bandwidth resource demand parameter, and the CPU characteristic parameters, memory characteristic parameters and bandwidth characteristic parameters of the respective second physical machines, the target physical machine can be determined among the second physical machines accurately, and thus the most suitable physical machine among the second physical machines is selected as the target physical machine so that after the virtual machine to be migrated is migrated to the target physical machine, the comprehensive load value of the target physical machine will not become too large. In such a manner, times of migration of virtual machines can be greatly reduced, the influence of migration on the overall performance of the cloud computing center can be mitigated, and the effective utilization rate of resources can be improved, while performance of the application services is ensured.

Based on the seventh example, an eighth example of the load balance scheduling method of the present disclosure is proposed. Referring to Fig. 10, in an embodiment, the step S320 includes:

At step S321, generating a demand vector of the virtual machine to be migrated based on the acquired CPU resource demand parameter, memory resource demand parameter and bandwidth resource demand parameter.

In this embodiment, a demand vector of the virtual machine to be migrated may be generated based on the CPU resource demand parameter, memory resource demand parameter and bandwidth resource demand parameter of the virtual machine to be migrated with respect to the respective second physical machines. The number of demand vectors is the same as the number of physical machines in the second physical machines, and elements in each of the demand vectors are the CPU resource demand parameter, the memory resource demand parameter, and the bandwidth resource demand parameter of the virtual machine to be migrated relative to the same physical machine of the second physical machines.

At step S322, generating performance vectors of the respective second physical machines based on the CPU characteristic parameters, the memory characteristic parameters and the bandwidth characteristic parameters.

In this embodiment, meanwhile, performance vectors of the respective second physical machines are generated based on the CPU characteristic parameters, the memory characteristic parameters and the bandwidth characteristic parameters of the respective second physical machines. The number of performance vectors is the same as the number of physical machines in the second physical machines, and elements in each of the performance vectors are the CPU characteristic parameter, the memory characteristic parameter and the bandwidth characteristic parameter of the same physical machine of the second physical machines. The demand vectors and the performance vectors are correspondingly arranged, that is, the ith demand vector and the ith performance vector correspond to the same physical machine of the second physical machines.

At step S323, determining the target physical machine from the second physical machines based on the demand vector, the performance vector and the preset weight vector.

In this embodiment, a difference vector between the performance vector and the demand vector of each of the second physical machines is calculated, and a product between the difference vector and a preset weight vector of each of the second physical machines is calculated, so as to obtain matching degrees of the respective second physical machines to the virtual machine to be migrated and use the second physical machine with the maximum matching degree as the target physical machine. If there is a difference vector having an element less than or equal to 0, the difference vector is set to be a 0 vector, that is, all elements of the difference vector are set to be 0. For example, for a certain physical machine among the second physical machines, a difference vector is firstly calculated according to the performance vector and the demand vector corresponding to that physical machine, and then a product between the difference vector and a preset weight vector, that is, a dot product between the difference vector and the preset weight vector, is calculated to obtain a matching degree of the physical machine to the virtual machine to be migrated. Then, a physical machine with the maximum matching degree with the virtual machine to be migrated among the second physical machines is selected as the target physical machine.

The preset weight vector may be reasonably set according to the actual situation. For example, the preset weight vector may be reasonably set according to a CPU characteristic parameter, a memory characteristic parameter, and a bandwidth characteristic parameter of a physical machine corresponding to the preset weight vector, and a sum of the three elements in the preset weight vector is 1.

In the load balance scheduling method according to this embodiment, by generating a demand vector of the virtual machine to be migrated based on the acquired CPU resource demand parameter, memory resource demand parameter and bandwidth resource demand parameter; then generating performance vectors of the respective second physical machines based on the CPU characteristic parameters, the memory characteristic parameters and the bandwidth characteristic parameters; and then determining the target physical machine from the second physical machines based on the demand vector, the performance vectors and a preset weight vector, the target physical machine can be determined according to the demand vector, the performance vector and the preset weight vector, and thus the most suitable physical machine among the second physical machines is determined to be the target physical machine so that after the virtual machine to be migrated is migrated to the target physical machine, the comprehensive load value of the target physical machine will not become too large. In such a manner, times of migration of virtual machines can be greatly reduced, the influence of migration on the overall performance of the cloud computing center can be mitigated, and the effective utilization rate of resources can be improved, while performance of the application services is ensured.

Based on the seventh example, a ninth example of the load balance scheduling method of the present disclosure is proposed. Referring to Fig. 11, in an embodiment, the step S310 includes:

At step S311, acquiring a demanded amount of CPU resources of the virtual machine to be migrated, and calculating the CPU resource demand parameter of the virtual machine to be migrated based on the demanded amount of CPU resources, the reserved amount of CPU resources of the second physical machines and the total amount of CPU resources of the second physical machines.

In this embodiment, the CPU resource demand parameter of the virtual machine to be migrated with respect to the respective second physical machines may be obtained according to the demanded amount of CPU resources of the virtual machine to be migrated, and the reserved amount of CPU resources and the total amount of CPU resources of the respective second physical machines. For example, taking a certain physical machine among the second physical machines as an example, CPU resource demand parameter of the virtual machine to be migrated relative to the physical machine = total amount of CPU resources of the virtual machine to be migrated/ (total amount of CPU resources of the physical machine - reserved amount of CPU resources of the physical machine).

At step S312, acquiring a demanded amount of memory resources of the virtual machine to be migrated, and calculating the memory resource demand parameter of the virtual machine to be migrated based on the demanded amount of memory resources, the reserved amount of memory resources of the second physical machines and the total amount of memory resources of the second physical machines.

In this embodiment, the memory resource demand parameter of the virtual machine to be migrated with respect to the respective second physical machines may be obtained according to the demanded amount of memory resources of the virtual machine to be migrated, and the reserved amount of memory resources and the total amount of memory resources of the respective second physical machines. For example, taking a certain physical machine among the second physical machines as an example, memory resource demand parameter of the virtual machine to be migrated relative to the physical machine = total amount of memory resources of the virtual machine to be migrated/ (total amount of memory resources of the physical machine - reserved amount of memory resources of the physical machine).

At step S313, acquiring a demanded amount of bandwidth resources of the virtual machine to be migrated, and calculating the bandwidth resource demand parameter of the virtual machine to be migrated based on the demanded amount of bandwidth resources, the reserved amount of bandwidth resources of the second physical machines and the total amount of bandwidth resources of the second physical machines.

In this embodiment, the bandwidth resource demand parameter of the virtual machine to be migrated with respect to the respective second physical machines may be obtained according to the demanded amount of bandwidth resources of the virtual machine to be migrated, and the reserved amount of bandwidth resources and the total amount of bandwidth resources of the respective second physical machines. For example, taking a certain physical machine among the second physical machines as an example, bandwidth resource demand parameter of the virtual machine to be migrated relative to the physical machine = total amount of bandwidth resources of the virtual machine to be migrated/ (total amount of bandwidth resources of the physical machine - reserved amount of memory resources of the physical machine).

In the load balance scheduling method according to this embodiment, by acquiring a demanded amount of CPU resources of the virtual machine to be migrated, and calculating the CPU resource demand parameter of the virtual machine to be migrated based on the demanded amount of CPU resources, the reserved amount of CPU resources of the second physical machines and the total amount of CPU resources of the second physical machines; then acquiring a demanded amount of memory resources of the virtual machine to be migrated, and calculating the memory resource demand parameter of the virtual machine to be migrated based on the demanded amount of memory resources, the reserved amount of memory resources of the second physical machines and the total amount of memory resources of the second physical machines; and then acquiring a demanded amount of bandwidth resources of the virtual machine to be migrated, and calculating the bandwidth resource demand parameter of the virtual machine to be migrated based on the demanded amount of bandwidth resources, the reserved amount of bandwidth resources of the second physical machines and the total amount of bandwidth resources of the second physical machines, the CPU resource demand parameter, the memory resource demand parameter and the bandwidth resource demand parameter of the virtual machine to be migrated regarding the respective second physical machines can be accurately obtained. In such a manner, the target physical machine can be accurately determined based on the above parameters so that times of migration of virtual machines can be greatly reduced, the influence of migration on the overall performance of the cloud computing center can be mitigated, and the effective utilization rate of resources can be improved, while performance of the application services is ensured.

In addition, in an embodiment of the present application, there is further provided a load balance scheduling device, including:

a first determining module configured to determine, based on current comprehensive load values of respective preset physical machines, whether there is a first physical machine satisfying a preset condition among the preset physical machines;

a second determining module configured to determine, in the case that there is a first physical machine satisfying the preset condition among the preset physical machines, a virtual machine to be migrated in the first physical machine according to a first preset rule;

a third determining module configured to determine, a target physical machine according to a second preset rule from second physical machines in the preset physical machines other than the first physical machine; and a migration module configured to migrate the virtual machine to be migrated to the target physical machine.

The first determining module includes:

a first determining unit configured to determine, based on current comprehensive load values of respective preset physical machines, whether there is an overload physical machine having a comprehensive load value greater than a maximum load threshold among the preset physical machines;

a second determining unit configured to determine, in the case that there is an overload physical machine among the preset physical machines, whether a number of overload events of the overload physical machine in a preset time interval before the current moment is greater than a first preset threshold; and

a first setting unit configured to take the overload physical machine as the first physical machine satisfying the preset condition when the number of overload events is greater than the first preset threshold.

The second determining module includes:

a first acquiring unit configured to acquire CPU utilization rates, memory utilization rates and bandwidth utilization rates of respective virtual machines in the first physical machine;

a first calculation unit configured to calculate migration loss ratios of the respective virtual machines based on the acquired CPU utilization rates, memory utilization rates and bandwidth utilization rates; and

a second setting unit configured to take a virtual machine with the maximum migration loss ratio among the respective virtual machines as the virtual machine to be migrated.

The first determining module includes:

a third determining unit configured to determine, based on the current comprehensive load values of respective preset physical machines, whether there is an underload physical machine having a comprehensive load value less than a minimum load threshold among the preset physical machines;
a fourth determining unit configured to determine, in the case that there is an underload physical machine among the preset physical machines, whether a number of underload events of the underload physical machine in a preset time interval before the current moment is greater than a second preset threshold; and
a third setting unit configured to take the underload physical machine as the first physical machine satisfying the preset condition when the number of underload events is greater than the second preset threshold.

The second determining module is further configured to use all the virtual machines in the first physical machine as virtual machines to be migrated. The load balance scheduling device further includes:

an acquiring module configured to acquire CPU characteristic parameters, memory characteristic parameters and bandwidth characteristic parameters of the respective preset physical machines; and
a calculation module configured to calculate the comprehensive load values of the respective preset physical machines based on the acquired CPU characteristic parameters, memory characteristic parameters and bandwidth characteristic parameters.

The acquiring module includes:

a second acquiring unit configured to acquire usage amount of CPU resources, reserved amount of CPU resources and total amount of CPU resources of the respective preset physical machines, and calculate the CPU characteristic parameters of the respective preset physical machines based on the acquired usage amount of CPU resources, reserved amount of CPU resources and total amount of CPU resources;
a third acquiring unit configured to acquire usage amount of memory resources, reserved amount of memory resources and total amount of memory resources of the respective preset physical machines, and calculate the memory characteristic parameters of the respective preset physical machines based on the acquired usage amount of memory resources, reserved amount of memory resources and total amount of memory resources; and
a fourth acquiring unit configured to acquire usage amount of bandwidth resources, reserved amount of bandwidth resources and total amount of bandwidth resources of the respective preset physical machines, and calculate the bandwidth characteristic parameters of the respective preset physical machines based on the acquired usage amount of bandwidth resources, reserved amount of bandwidth resources and total amounts of bandwidth resources.

The third determining module includes:

a fifth acquiring unit configured to acquire a CPU resource demand parameter, a memory resource demand parameter and a bandwidth resource demand parameter of the virtual machine to be migrated; and
a fifth determining unit configured to determine the target physical machine from the second physical machines based on the acquired CPU resource demand parameter, memory resource demand parameter and bandwidth resource demand parameter, and the CPU characteristic parameters, memory characteristic parameters and bandwidth characteristic parameters of the respective second physical machines.

The fifth determining unit includes:

a first generation subunit configured to generate a demand vector of the virtual machine to be migrated based on the acquired CPU resource demand parameter, memory resource demand parameter and bandwidth resource demand parameter;
a second generation subunit configured to generate performance vectors of the respective second physical machines based on the CPU characteristic parameters, the memory characteristic parameters and the bandwidth characteristic parameters; and
a determining subunit configured to determine the target physical machine from the second physical machines based on the demand vector, the performance vector and the preset weight vector.

The fifth acquiring unit includes:

a first acquiring subunit configured to acquire a demanded amount of CPU resources of the virtual machine to be migrated, and calculate the CPU resource demand parameter of the virtual machine to be migrated based on the demanded amount of CPU resources, the reserved amount of CPU resources of the second physical machines and the total amount of CPU resources of the second physical machines;

a second acquiring subunit configured to acquire a demanded amount of memory resources of the virtual machine to be migrated, and calculate the memory resource demand parameter of the virtual machine to be migrated based on the demanded amount of memory resources, the reserved amount of memory resources of the second physical machines and the total amount of memory resources of the second physical machines; and

a third acquiring subunit configured to acquire a demanded amount of bandwidth resources of the virtual machine to be migrated, and calculate the bandwidth resource demand parameter of the virtual machine to be migrated based on the demanded amount of bandwidth resources, the reserved amount of bandwidth resources of the second physical machines and the total amount of bandwidth resources of the second physical machines.

The load balance scheduling devices in the above embodiments are similar to the respective embodiments of the load balance scheduling methods, and thus are not repeated herein.

In addition, in an embodiment of the present application, there is further provided a computer readable storage medium, the computer readable storage medium having a load balance scheduling program stored thereon which, when executed by a processor, causes the following operations to be performed:

determining, based on current comprehensive load values of respective preset physical machines, whether there is a first physical machine satisfying a preset condition among the preset physical machines;

determining, in the case that there is a first physical machine satisfying the preset condition among the preset physical machines, a virtual machine to be migrated in the first physical machine according to a first preset rule;

determining, a target physical machine according to a second preset rule from second physical machines in the preset physical machines other than the first physical machine; and

migrating the virtual machine to be migrated to the target physical machine.

The load balance scheduling program, when executed by the processor, further causes the following operations to be performed:

determining, based on current comprehensive load values of respective preset physical machines, whether there is an overload physical machine having a comprehensive load value greater than a maximum load threshold among the preset physical machines;

determining, in the case that there is an overload physical machine among the preset physical machines, whether a number of overload events of the overload physical machine in a preset time interval before the current moment is greater than a first preset threshold; and

using the overload physical machine as the first physical machine satisfying the preset condition when the number of overload events is greater than the first preset threshold.

The load balance scheduling program, when executed by the processor, further causes the following operations to be performed:

acquiring CPU utilization rates, memory utilization rates and bandwidth utilization rates of respective virtual machines in the first physical machine;

calculating migration loss ratios of the respective virtual machines based on the acquired CPU utilization rates, memory utilization rates and bandwidth utilization rates; and

using a virtual machine with the maximum migration loss ratio among the respective virtual machines as the virtual machine to be migrated.

The load balance scheduling program, when executed by the processor, further causes the following operations to be performed:

determining, based on the current comprehensive load values of respective preset physical machines, whether there is an underload physical machine having a comprehensive load value less than a minimum load threshold among the preset physical machines;

determining, in the case that there is an underload physical machine among the preset physical machines, whether a number of underload events of the underload physical machine in a preset time interval before the current moment is greater than a second preset threshold; and

using the underload physical machine as the first physical machine satisfying the preset condition when the number of underload events is greater than the second preset threshold.

The step of determining the virtual machine to be migrated in the first physical machine according to the first preset rule includes: using all the virtual machines in the first physical machine as virtual machines to be migrated. The load balance scheduling program, when executed by the processor, further causes the following operations to be performed:

acquiring CPU characteristic parameters, memory characteristic parameters and bandwidth characteristic parameters of the respective preset physical machines; and
calculating the comprehensive load values of the respective preset physical machines based on the acquired CPU characteristic parameters, memory characteristic parameters and bandwidth characteristic parameters.

The load balance scheduling program, when executed by the processor, further causes the following operations to be performed:

acquiring usage amounts of CPU resources, reserved amount of CPU resources and total amount of CPU resources of the respective preset physical machines, and calculating the CPU characteristic parameters of the respective preset physical machines based on the acquired usage amount of CPU resources, reserved amount of CPU resources and total amounts of CPU resources;
acquiring usage amount of memory resources, reserved amount of memory resources and total amount of memory resources of the respective preset physical machines, and calculating the memory characteristic parameters of the respective preset physical machines based on the acquired usage amount of memory resources, reserved amount of memory resources and total amount of memory resources; and
acquiring usage amount of bandwidth resources, reserved amount of bandwidth resources and total amount of bandwidth resources of the respective preset physical machines, and calculating the bandwidth characteristic parameters of the respective preset physical machines based on the acquired usage amount of bandwidth resources, reserved amount of bandwidth resources and total amount of bandwidth resources.

The load balance scheduling program, when executed by the processor, further causes the following operations to be performed:

acquiring a CPU resource demand parameter, a memory resource demand parameter and a bandwidth resource demand parameter of the virtual machine to be migrated; and
determining the target physical machine from the second physical machines based on the acquired CPU resource demand parameter, memory resource demand parameter and bandwidth resource demand parameter, and the CPU characteristic parameters, memory characteristic parameters and bandwidth characteristic parameters of the respective second physical machines.

The load balance scheduling program, when executed by the processor, further causes the following operations to be performed:

generating a demand vector of the virtual machine to be migrated based on the acquired CPU resource demand parameter, memory resource demand parameter and bandwidth resource demand parameter;
generating performance vectors of the respective second physical machines based on the CPU characteristic parameters, the memory characteristic parameters and the bandwidth characteristic parameters; and
determining the target physical machine from the second physical machines based on the demand vector, the performance vector and the preset weight vector.

The load balance scheduling program, when executed by the processor, further causes the following operations to be performed:

acquiring a demanded amount of CPU resources of the virtual machine to be migrated, and calculating the CPU resource demand parameter of the virtual machine to be migrated based on the demanded amount of CPU resources, the reserved amounts of CPU resources of the second physical machines and the total amounts of CPU resources of the second physical machines;
acquiring a demanded amount of memory resources of the virtual machine to be migrated, and calculating the memory resource demand parameter of the virtual machine to be migrated based on the demanded amount of memory resources, the reserved amount of memory resources of the second physical machines and the total amount of memory resources of the second physical machines; and

acquiring a demanded amount of bandwidth resources of the virtual machine to be migrated, and calculating the bandwidth resource demand parameter of the virtual machine to be migrated based on the demanded amount of bandwidth resources, the reserved amount of bandwidth resources of the second physical machines and the total amount of bandwidth resources of the second physical machines.

In the present disclosure, it is determined whether there is a first physical machine satisfying a preset condition among the preset physical machines based on current comprehensive load values of respective preset physical machines; then a virtual machine to be migrated in the first physical machine is determined according to a first preset rule in the case that there is a first physical machine satisfying the preset condition among the preset physical machines; next, a target physical machine is determined according to a second preset rule from second physical machines in the preset physical machines other than the first physical machine; and finally, the virtual machine to be migrated is migrated to the target physical machine. so that migration of the virtual machine to be migrated in the first physical machine satisfying the preset condition is completed, and times of migration of virtual machines are greatly reduced, the influence of migration on the overall performance of the cloud computing center is mitigated, and the effective utilization rate of resources is improved, while performance of the application services is ensured.

The terms "comprise," "comprising" or any variant thereof herein mean to be non-exclusive so that a process, method, item or system including a series of elements includes not only said elements, but also other elements not explicitly listed, or inherent elements of such processes, methods, items or systems. In the absence of more limitations, an element defined by "comprising a ..." do not exclude the existence of additional identical elements in the process, method, item or system including the element.

The above example numbers are for descriptive purposes only and do not represent example merits or demerits.

Those of ordinary skill in the art will appreciate that all or some steps of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or step may be performed cooperatively by several physical components. Some or all components may be implemented as software executed by a processor, such as a digital signal processor or microprocessor, or implemented as hardware, or implemented as an integrated circuit, such as an application specific integrated circuit. Such software may be distributed on a computer readable medium which may include a computer storage medium (or non-transitory medium) and communication medium (or transitory medium). As is well known to those of ordinary skill in the art, the term computer storage medium includes volatile and nonvolatile, removable and non-removable medium implemented in any method or technology for storing information, such as computer readable instructions, data structures, program modules or other data. A computer storage medium includes, but is not limited to, RAM, ROM, EEPROM, flash memory or other memory technology, CD-ROM, digital versatile disc (DVD) or other optical disc storage, magnetic cartridge, magnetic tape, magnetic disk storage or other magnetic storage devices, or may be any other medium used for storing the desired information and accessible by a computer. Moreover, it is well known to those skilled in the art that communication medium typically includes a computer readable instruction, a data structure, a program module, or other data in a modulated data signal, such as a carrier wave or other transport mechanism, and may include any information delivery medium.

The above are merely exemplary embodiments of the present disclosure, and not intended to limit the scope of the present disclosure, and all equivalent structures or equivalent of processes that may be modified from the contents of the present disclosure and the attached drawings, or directly or indirectly applied to other related technical fields, are also included in the scope of the present disclosure.

**Claims**

1. A load balance scheduling method, wherein the load balance scheduling method comprises steps of:

   determining (S100), based on current comprehensive load values of respective preset physical machines, whether there is a first physical machine satisfying a preset condition among the preset physical machines;
   determining (S200), in the case that there is a first physical machine satisfying the preset condition among the preset physical machines, a virtual machine to be migrated in the first physical machine according to a first preset rule;
   determining (S300), a target physical machine according to a second preset rule from second physical machines in the preset physical machines other than the first physical machine; and

migrating (S400) the virtual machine to be migrated to the target physical machine.

2.  The load balance scheduling method according to claim 1, wherein the step of determining (S100), based on current comprehensive load values of respective preset physical machines, whether there is a first physical machine satisfying the preset condition among the preset physical machines comprises:

    determining (S110), based on current comprehensive load values of respective preset physical machines, whether there is an overload physical machine having a comprehensive load value greater than a maximum load threshold among the preset physical machines;
    determining (S120), in the case that there is an overload physical machine among the preset physical machines, whether a number of overload events of the overload physical machine in a preset time interval before the current moment is greater than a first preset threshold; and
    using (S130) the overload physical machine as the first physical machine satisfying the preset condition when the number of overload events is greater than the first preset threshold.

3.  The load balance scheduling method according to claim 2, wherein the step of determining (S200), in the case that there is a first physical machine satisfying the preset condition among the preset physical machines, the virtual machine to be migrated in the first physical machine according to the first preset rule comprises:

    acquiring (S210) CPU utilization rates, memory utilization rates and bandwidth utilization rates of respective virtual machines in the first physical machine;
    calculating (S220) migration loss ratios of the respective virtual machines based on the acquired CPU utilization rates, memory utilization rates and bandwidth utilization rates; and
    using (S230) a virtual machine with the maximum migration loss ratio among the virtual machines as the virtual machine to be migrated.

4.  The load balance scheduling method according to claim 1, wherein the step of determining (S100), based on current comprehensive load values of respective preset physical machines, whether there is a first physical machine satisfying the preset condition among the preset physical machines comprises:

    determining (S140), based on the current comprehensive load values of respective preset physical machines, whether there is an underload physical machine having a comprehensive load value less than a minimum load threshold among the preset physical machines;
    determining (S150), in the case that there is an underload physical machine among the preset physical machines, whether a number of underload events of the underload physical machine in a preset time interval before the current moment is greater than a second preset threshold; and
    using (S160) the underload physical machine as the first physical machine satisfying the preset condition when the number of underload events is greater than the second preset threshold; and
    the step of determining the virtual machine to be migrated in the first physical machine according to the first preset rule comprises: using all the virtual machines in the first physical machine as virtual machines to be migrated.

5.  The load balance scheduling method according to any one of claims 1 to 4, wherein before the step of determining (S100), based on current comprehensive load values of respective preset physical machines, whether there is a first physical machine satisfying the preset condition among the preset physical machines, the load balance scheduling method further comprises:

    acquiring (S500) CPU characteristic parameters, memory characteristic parameters and bandwidth characteristic parameters of the respective preset physical machines; and
    calculating (S600) the comprehensive load values of the respective preset physical machines based on the acquired CPU characteristic parameters, memory characteristic parameters and bandwidth characteristic parameters.

6.  The load balance scheduling method according to claim 5, wherein the step of acquiring (S500) CPU characteristic parameters, memory characteristic parameters and bandwidth characteristic parameters of the respective preset physical machines comprises:

    acquiring (S510) usage amounts of CPU resources, reserved amounts of CPU resources and total amounts of CPU resources of the respective preset physical machines, and calculating the CPU characteristic parameters of the respective preset physical machines based on the acquired usage amount of CPU resources, reserved amount of CPU resources and total amount of CPU resources;

acquiring (S520) usage amounts of memory resources, reserved amounts of memory resources and total amounts of memory resources of the respective preset physical machines, and calculating the memory characteristic parameters of the respective preset physical machines based on the acquired usage amount of memory resources, reserved amount of memory resources and total amount of memory resources; and

acquiring (S530) usage amounts of bandwidth resources, reserved amounts of bandwidth resources and total amounts of bandwidth resources of the respective preset physical machines, and calculating the bandwidth characteristic parameters of the respective preset physical machines based on the acquired usage amount of bandwidth resources, reserved amount of bandwidth resources and total amount of bandwidth resources.

7. The load balance scheduling method according to claim 5, wherein the step (S300) of determining, the target physical machine according to the second preset rule from other physical machines in the preset physical machines other than the first physical machine comprises:

acquiring (S310) a CPU resource demand parameter, a memory resource demand parameter and a bandwidth resource demand parameter of the virtual machine to be migrated; and

determining (S320) the target physical machine from the second physical machines based on the acquired CPU resource demand parameter, memory resource demand parameter and bandwidth resource demand parameter, and the CPU characteristic parameters, memory characteristic parameters and bandwidth characteristic parameters of the respective second physical machines.

8. The load balance scheduling method according to claim 7, wherein the step (S320) of determining the target physical machine from the second physical machines based on the acquired CPU resource demand parameter, memory resource demand parameter and bandwidth resource demand parameter, and the CPU characteristic parameters, memory characteristic parameters and bandwidth characteristic parameters of the respective second physical machines comprises:

generating (S321) a demand vector of the virtual machine to be migrated based on the acquired CPU resource demand parameter, memory resource demand parameter and bandwidth resource demand parameter;

generating (S322) performance vectors of the respective second physical machines based on the CPU characteristic parameters, the memory characteristic parameters and the bandwidth characteristic parameters; and

determining (S323) the target physical machine from the second physical machines based on the demand vector, the performance vectors and a preset weight vector.

9. The load balance scheduling method according to claim 7, wherein the step (S310) of acquiring the CPU resource demand parameter, the memory resource demand parameter and the bandwidth resource demand parameter of the virtual machine to be migrated comprises:

acquiring (S311) a demanded amount of CPU resources of the virtual machine to be migrated, and calculating the CPU resource demand parameter of the virtual machine to be migrated based on the demanded amount of CPU resources, the reserved amounts of CPU resources of the second physical machines and the total amounts of CPU resources of the second physical machines;

acquiring (S312) a demanded amount of memory resources of the virtual machine to be migrated, and calculating the memory resource demand parameter of the virtual machine to be migrated based on the demanded amount of memory resources, the reserved amount of memory resources of the second physical machines and the total amount of memory resources of the second physical machines; and

acquiring (S313) a demanded amount of bandwidth resources of the virtual machine to be migrated, and calculating the bandwidth resource demand parameter of the virtual machine to be migrated based on the demanded amount of bandwidth resources, the reserved amount of bandwidth resources of the second physical machines and the total amount of bandwidth resources of the second physical machines.

10. A load balance scheduling device, wherein the load balance scheduling device comprises: a memory (1005), a processor (1001), and a load balance scheduling program stored in the memory (1005) and operable by the processor (1001), wherein load balance scheduling program, when executed by the processor (1001), causes the load balance scheduling method according to any one of claims 1 to 9 to be implemented.

11. A computer readable storage medium, wherein the computer readable storage medium has a load balance scheduling program stored thereon which, when executed by a processor, causes the steps of the load balance scheduling method according to any one of claims 1 to 9 to be implemented.

1005

1001

Processor

1002

| Operating system |
| Network communication module |
| User interface module |
| Load balance scheduling program |

Memory

1003

1004

| User interface | | Network interface |

**FIG. 1**

S100
Determine, based on current comprehensive load values of respective preset physical machines, whether there is a first physical machine satisfying a preset condition among the preset physical machines

S200
Determine, when there is a first physical machine satisfying the preset condition among the preset physical machines, a virtual machine to be migrated in the first physical machine according to a first preset rule

S300
Determine, a target physical machine according to a second preset rule from second physical machines in the preset physical machines other than the first physical machine

S400
Migrate the virtual machine to be migrated to the target physical machine

**FIG. 2**

| Application service 1 | Application service 2 | Application service 3 |
|---|---|---|

| Virtual machine 1 | Virtual machine 2 | Virtual machine 3 | Virtual machine 4 | Virtual machine 5 |
|---|---|---|---|---|

| Physical machine 1 | Physical machine 2 |
|---|---|

**FIG. 3**

S110 — Determine, based on current comprehensive load values of respective preset physical machines, whether there is an overload physical machine having a comprehensive load value greater than a maximum load threshold among the preset physical machines

S120 — Determine, when there is an overload physical machine among the preset physical machines, whether a number of overload events of the overload physical machine in a preset time interval before the current moment is greater than a first preset threshold

S130 — Use the overload physical machine as the first physical machine satisfying the preset condition when the number of overload events is greater than the first preset threshold

**FIG. 4**

S210 — Acquire CPU utilization rates, memory utilization rates and bandwidth utilization rates of respective virtual machines in the first physical machine

S220 — Calculate migration loss ratios of the respective virtual machines based on the acquired CPU utilization rates, memory utilization rates and bandwidth utilization rates

S230 — Use a virtual machine with the maximum migration loss ratio among the respective virtual machines as the virtual machine to be migrated

**FIG. 5**

S140 — Determine, based on the current comprehensive load values of respective preset physical machines, whether there is an underload physical machine having a comprehensive load value less than a minimum load threshold among the preset physical machines

S150 — Determine, when there is an underload physical machine among the preset physical machines, whether a number of underload events of the underload physical machine in a preset time interval before the current moment is greater than a second preset threshold

S160 — Use the underload physical machine as the first physical machine satisfying the preset condition when the number of underload events is greater than the second preset threshold

**FIG. 6**

S500 — Acquire CPU characteristic parameters, memory characteristic parameters and bandwidth characteristic parameters of the respective preset physical machines

S600 — Calculate the comprehensive load values of the respective preset physical machines based on the acquired CPU characteristic parameters, memory characteristic parameters and bandwidth characteristic parameters

S100 — Determine, based on current comprehensive load values of respective preset physical machines, whether there is a first physical machine satisfying a preset condition among the preset physical machines

S200 — Determine, when there is a first physical machine satisfying the preset condition among the preset physical machines, a virtual machine to be migrated in the first physical machine according to a first preset rule

S300 — Determine, a target physical machine according to a second preset rule from second physical machines in the preset physical machines other than the first physical machine

S400 — Migrate the virtual machine to be migrated to the target physical machine

## FIG. 7

S510 — Acquire usage amounts of CPU resources, reserved amounts of CPU resources and total amounts of CPU resources of the respective preset physical machines, and calculate the CPU characteristic parameters of the respective preset physical machines based on the acquired usage amount of CPU resources, reserved amount of CPU resources and total amount of CPU resources

S520 — Acquire usage amounts of memory resources, reserved amounts of memory resources and total amounts of memory resources of the respective preset physical machines, and calculate the memory characteristic parameters of the respective preset physical machines based on the acquired usage amount of memory resources, reserved amount of memory resources and total amount of memory resources

S530 — Acquire usage amounts of bandwidth resources, reserved amounts of bandwidth resources and total amounts of bandwidth resources of the respective preset physical machines, and calculate the bandwidth characteristic parameters of the respective preset physical machines based on the acquired usage amount of bandwidth resources, reserved amount of bandwidth resources and total amount of bandwidth resources

## FIG. 8

S310

Acquire a CPU resource demand parameter, a memory resource demand parameter and a bandwidth resource demand parameter of the virtual machine to be migrated

S320

Determine the target physical machine from the second physical machines based on the acquired CPU resource demand parameter, memory resource demand parameter and bandwidth resource demand parameter, and the CPU characteristic parameters, memory characteristic parameters and bandwidth characteristic parameters of the respective second physical machines

**FIG. 9**

S321

Generate a demand vector of the virtual machine to be migrated based on the acquired CPU resource demand parameter, memory resource demand parameter and bandwidth resource demand parameter

S322

Generate performance vectors of the respective second physical machines based on the CPU characteristic parameters, the memory characteristic parameters and the bandwidth characteristic parameters

S323

Determine the target physical machine from the second physical machines based on the demand vector, the performance vectors and a preset weight vector

**FIG. 10**

S311

Acquire a demanded amount of CPU resources of the virtual machine to be migrated, and calculate the CPU resource demand parameter of the virtual machine to be migrated based on the demanded amount of CPU resources, the reserved amounts of CPU resources of the second physical machines and the total amounts of CPU resources of the second physical machines

S312

Acquire a demanded amount of memory resources of the virtual machine to be migrated, and calculate the memory resource demand parameter of the virtual machine to be migrated based on the demanded amount of memory resources, the reserved amount of memory resources of the second physical machines and the total amount of memory resources of the second physical machines

S313

Acquire a demanded amount of bandwidth resources of the virtual machine to be migrated, and calculate the bandwidth resource demand parameter of the virtual machine to be migrated based on the demanded amount of bandwidth resources, the reserved amount of bandwidth resources of the second physical machines and the total amount of bandwidth resources of the second physical machines

**FIG. 11**

## INTERNATIONAL SEARCH REPORT

| International application No. |
| --- |
| **PCT/CN2018/094827** |

**A.   CLASSIFICATION OF SUBJECT MATTER**

G06F 9/50(2006.01)i

According to International Patent Classification (IPC) or to both national classification and IPC

**B.   FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI, EPODOC, CNPAT, CNKI: 云, 负载, 均衡, 调度, 过载, 物理机, 虚拟机, 迁移, cloud, load, balance, schedule, overload, physical machine, virtual machine, migration

**C.   DOCUMENTS CONSIDERED TO BE RELEVANT**

| Category* | Citation of document, with indication, where appropriate, of the relevant passages | Relevant to claim No. |
| --- | --- | --- |
| X | CN 106909462 A (ZHENGZHOU YUNHAI INFORMATION TECHNOLOGY CO., LTD.) 30 June 2017 (2017-06-30) description, paragraphs 0037-0045 | 1-11 |
| X | CN 106125888 A (HOHAI UNIVERSITY, CHANGZHOU CAMPUS) 16 November 2016 (2016-11-16) description, paragraphs 0013-0034 | 1-11 |
| X | CN 103605578 A (WUHAN UNIVERSITY OF TECHNOLOGY) 26 February 2014 (2014-02-26) description, paragraphs 0019-0034 | 1-11 |
| X | WO 2017000628 A1 (HUAWEI TECHNOLOGIES CO., LTD.) 05 January 2017 (2017-01-05) description, page 6, line 25 to page 12, line 30 | 1-11 |
| A | WO 2014005277 A1 (EMPIRE TECHNOLOGY DEV. LLC.) 09 January 2014 (2014-01-09) entire document | 1-11 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 September 2018** | **27 September 2018** |

| Name and mailing address of the ISA/CN | Authorized officer |
| --- | --- |
| **State Intellectual Property Office of the P. R. China No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/094827**

| Patent document cited in search report | | | Publication date (day/month/year) | Patent family member(s) | | | Publication date (day/month/year) |
|---|---|---|---|---|---|---|---|
| CN | 106909462 | A | 30 June 2017 | None | | | |
| CN | 106125888 | A | 16 November 2016 | None | | | |
| CN | 103605578 | A | 26 February 2014 | None | | | |
| WO | 2017000628 | A1 | 05 January 2017 | CN | 106326000 | A | 11 January 2017 |
| WO | 2014005277 | A1 | 09 January 2014 | CN | 104412235 | A | 11 March 2015 |
| | | | | US | 2014244843 | A1 | 28 August 2014 |

Form PCT/ISA/210 (patent family annex) (January 2015)